# FASCICULE DE BREVET EUROPEEN

(11) **EP 0 491 609 B1**
(45) Date de publication et mention de la délivrance du brevet: **27.04.1994**
(21) Numéro de dépôt: 91403399.8
(22) Date de dépôt: 16.12.1991
(51) Int. Cl.: F16L 33/02

(54) **Collier de serrage**
Spannband
Clamping band

(30) Priorité: 19.12.1990 FR 9015954
(43) Date de publication de la demande: 24.06.1992
(73) Titulaire: Etablissements CAILLAU, F-92130 Issy-les-Moulineaux (FR)
(72) Inventeur: Calmettes, Lionel, F-41200 Romorantin Lanthenay (FR); Andre, Michel, F-41200 Romorantin Lanthenay (FR)
(74) Mandataire: Descourtieux, Philippe

(56) Documents cités:
- EP-A- 0 344 132

## Description

Le brevet EP-A-3 192 a décrit un collier de serrage constitué par une bande de métal enroulée sur elle-même, dont les deux extrémités sont respectivement pourvues d'un pli radial, formant point d'appui pour le serrage du collier au moyen d'un outil du genre pince.

Le pli radial de l'une des extrémités de la bande, de préférence de l'extrémité du brin extérieur, est muni d'un crochet susceptible de passer derrière le pli radial de l'autre extrémité, au cours de l'opération de serrage du collier, en vue de s'y accrocher et de maintenir ainsi le collier dans sa position serrée. D'autre part, l'extrémité du brin intérieur de la bande, dont le pli radial est de préférence sans crochet, se prolonge au-delà dudit pli au moins au-delà du crochet dans la position fermée du collier.

Un tel collier de serrage est largement utilisé dans l'industrie, notamment dans la construction automobile, en particulier pour assurer la fixation d'un tuyau souple emmanché sur un tube rigide.

On s'est cependant aperçu que, dans le cas de colliers de petit diamètre, des difficultés surviennent au moment soit du montage, soit du démontage du collier, en raison de la flexibilité insuffisante du crochet dont est muni l'un des plis radiaux, en général celui de l'extrémité du brin extérieur de la bande.

On a déjà décrit dans la demande européenne EP-A-0 458 701 ( priorité française en date du 23 mai 1990 au nom de la demanderesse), et état de la technique selon l'Art. 54(3) CBE un collier de serrage du type en question, mais amélioré pour augmenter la flexibilité du crochet et faciliter ainsi le montage et le démontage. La demande EP-A-0 344 132 propose également une autre solution à ce problème.

La présente invention poursuit le même but que les demandes précitées mais propose une autre solution avantageuse pour parvenir à un résultat analogue, et pour procurer en même temps au collier une capacité de déformation élastique, tant à l'extension qu'à la contraction.

Selon l'invention, le crochet présente, entre l'oreille qui le porte et sa propre extrémité libre, une ondulation dont le rayon intérieur, dans sa zone de plus forte courbure, est, à l'état non serré du collier, supérieur à l'épaisseur de la bande, de préférence supérieur à deux fois cette épaisseur.

L'invention sera mieux comprise et ses avantages apparaîtront au cours de la description de deux modes de réalisation en référence au dessin annexé, dans lequel
- la figure 1 est une vue en élévation et de profil d'un collier de serrage conforme à l'invention
- la figure 2 est une vue analogue à la figure 1, d'une variante de réalisation.

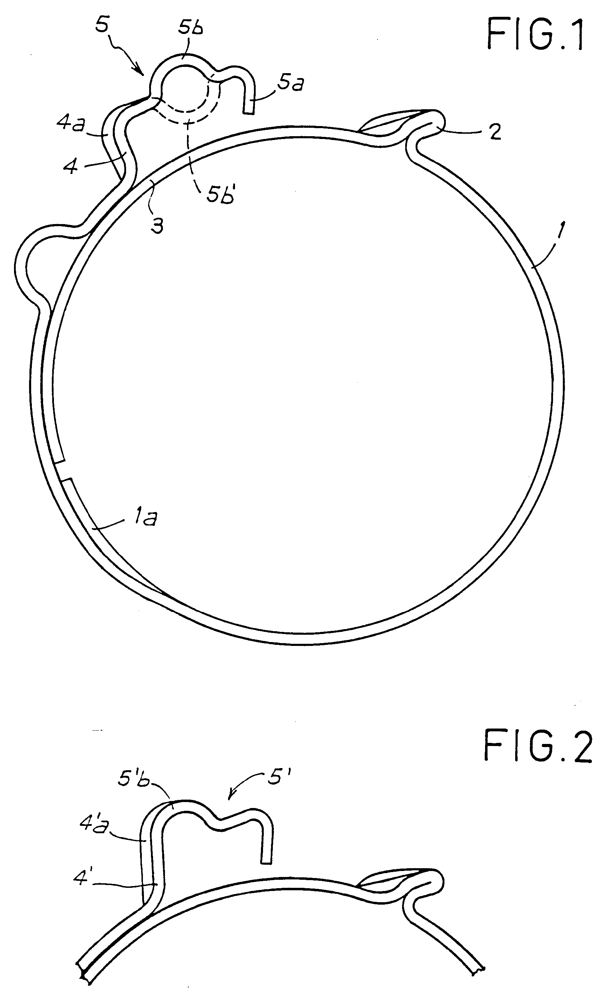

Si l'on se reporte tout d'abord à la figure 1, on voit un collier du type décrit dans le brevet européen précité. La bande métallique **1**, enroulée sur elle-même, comporte au voisinage de l'extrémité du brin intérieur une oreille **2** constituée par un pli radial, lequel est lié à un prolongement **3** situé sous le brin extérieur. Ce dernier comporte également une oreille **4** constituée par un pli radial généralement renforcé par une nervure **4a** et muni d'un crochet **5**.

A l'état ouvert du collier, tel qu'il est représenté sur le dessin, le crochet **5** est situé à quelque distance de l'oreille **2**, mais le prolongement **3** s'étend déjà au-delà de l'oreille **4**. De préférence, ainsi qu'on le voit, le bord terminal du prolongement **3** présente une forme de fourchette susceptible de coopérer avec un bossage **1a** faisant radialement saillie sur la face interne de la bande, ainsi qu'on l'a décrit dans le brevet EP-A-243 224.

Dans la partie du crochet **5**, sensiblement parallèle à la périphérie du collier, située entre l'oreille **4** et l'extrémité libre **5a**, est prévue une ondulation **5b** faisant radialement saillie vers l'extérieur du collier. Cette ondulation, généralement obtenue par estampage lors de la fabrication du collier, présente, dans sa zone de plus forte courbure, un rayon relativement important, supérieur à l'épaisseur de la bande **1**, de préférence supérieur à deux fois cette épaisseur.

L'ondulation pourrait cependant faire saillie vers l'intérieur du collier, comme on l'a schématiquement représenté **(5b')** en trait ponctué sur la figure 1.

Si l'on se reporte maintenant à la figure 2 on voit une variante de réalisation dans laquelle l'ondulation **5'b** du crochet **5'** est raccordée de façon continue à l'oreille **4'** dont elle constitue un prolongement. La nervure de renforcement **4'a** s'étend elle-même avantageusement sur une partie au moins de l'ondulation **5'b**, par exemple sur sa branche opposée à l'extrémité libre **5'a** du crochet.

Dans l'une comme dans l'autre des variantes, le brin extérieur du collier peut présenter une ou plusieurs ondulations, telles que celle représentée sur la figure 1, et réalisées si nécessaire, conformément à la demande de brevet EP-A-0 460 989 (priorité du 23 mai 1990 au nom de la demanderesse), et état de la technique selon l'Art. 54(3) CBE

On sait que des ondulations de ce type permettent d'obtenir une "réserve de capacité" du collier, les déformations de la bande qui le constitue restant dans le domaine de l'élasticité du matériau.

Au moment du serrage du collier, l'outil prend appui sur les oreilles **2** et **4** pour faire passer l'extrémité libre **5a** (ou **5'a**) du crochet **5** (ou **5'**) derrière l'oreille **2**. Dans l'exemple représenté, le prolongement **3** s'étend au-delà de l'oreille **4** lorsque le collier est en position ouverte. Il pourrait ne pas en être toujours ainsi, mais il est essentiel, ainsi qu'on le sait, qu'en position fermée du collier ce prolongement s'étende non seulement sous le crochet **5** au moins jusqu'à l'oreille **4**, mais également au delà des ondulations du brin extérieur, s'il en existe.

La présence de l'ondulation **5b** (ou **5'b**) facilite le mouvement de basculement du crochet **5** lorsqu'il franchit l'obstacle que constitue l'oreille **2** et la déformation du crochet reste dans le domaine d'élasticité du matériau de la bande; l'accrochage sur l'oreille **2** s'effectue plus franchement que sur la plupart des colliers connus. De même, si l'on veut démonter le collier par dégrafage du crochet **5** de l'oreille **2**, le mouvement de basculement indispensable est à nouveau facilité.

De plus cette ondulation **5b** (ou **5'b**) procure au collier une "réserve de capacité" s'ajoutant à celle obtenue par les ondulations éventuellement prévues sur le brin extérieur, c'est-à-dire augmente la capacité de déformation élastique du collier, tant à l'extension qu'à la contraction.

## Revendications

1. Collier de serrage constitué par une bande métallique **(1)** enroulée sur elle-même, dont les extrémités sont respectivement munies de moyens complémentaires d'accrochage comportant, notamment, un crochet **(5)** porté par une première oreille (4) et susceptible de passer derrière un épaulement ou seconde oreille **(2)** au cours de l'opération de serrage, l'extrémité intérieure de la bande se prolongeant, dans la position fermée du collier, au moins au-delà du crochet, caractérisé en ce que le crochet **(5)** présente, entre la première oreille **(4)** et sa propre extrémité libre **(5a)**, une ondulation **(5b)** dont le rayon intérieur est supérieur, à l'état non serré du collier, à l'épaisseur de la bande, de préférence supérieur à deux fois cette épaisseur.

2. Collier selon la revendication 1, caractérisé en ce que l'ondulation **(5b)** est saillante par rapport au crochet vers l'extérieur du collier.

3. Collier selon la revendication 1, caractérisé en ce que l'ondulation **(5b')** est saillante par rapport au crochet vers l'intérieur du collier.

4. Collier selon l'une quelconque des revendications 1 à 3, caractérisé en ce que l'ondulation **(5'b)** constitue un prolongement de l'oreille **(4)** portant le crochet **(5')**.

## Patentansprüche

1. Klemmband, gebildet durch ein aufgerolltes Metallband (1) dessen Enden jeweils mit komplementären Verhakungsmitteln versehen sind, welche insbesondere einen Haken (5) aufweisen, der an einem ersten Lappen (4) vorgesehen ist und während des Klemmvorgangs eine Schulter oder einen zweiten Lappen (2) hintergreifen kann, wobei das innere Ende des Bandes in der geschlossenen Position des Klemmbandes zumindest über den Haken hinaus verlängert ist, dadurch gekennzeichnet, daß der Haken (5) zwischen dem ersten Lappen (4) und seinem eigenen freien Ende (5a) eine Wellung (5b) aufweist, deren Innenradius im nicht geklemmten Zustand des Klemmbandes größer als die Dicke des Bandes, vorzugsweise größer als zweimal diese Dicke, ist.

2. Klemmband nachAnspruch 1, dadurch gekennzeichnet, daß die Wellung (5b) in bezug auf den Haken vom Klemmband nach außen absteht.

3. Klemmband nach Anspruch 1, dadurch gekennzeichnet, daß die Wellung (5b') in bezug auf den Haken vom Klemmband nach innen absteht.

4. Klemmband nach einem der Ansprüche 1 bis 3, dadurch gekennzeichnet, daß die Wellung (5'b) eine Verlängerung des den Haken (5') aufweisenden Lappens (4) ist.

## Claims

1. Clamp constituted by a metal band (1) wound on itself, whose ends are respectively provided with complementary fastening means comprising, notably, a hook (5) carried by a first lug (4) and adapted to pass behind a shoulder or second lug (2) during the tightening operation, the inside end of the band extending, in the closed position of the clamp, at least beyond the hook, characterized in that the hook (5) has, between the first lug (4) and its own free end (5a), a corrugation (5b) whose inside radius it greater, in the released position of the clamp, than the thickness of the band, preferably greater than twice said thickness.

2. Clamp according to claim 1, characterized in that the corrugation (5b) is protruding with respect to the hook, outwardly to the clamp.

3. Clamp according to claim 1, characterized in that the corrugation (5b) is protruding with respect to the hook, inwardly to the clamp.

4. Clamp according to any one of claims 1 to 3, characterized in that the corrugation (5b) constitutes an extension of the lug (4) carrying the hook (5).
